# FASCICULE DE BREVET EUROPEEN

(11) **EP 2 197 650 B1**
(45) Date de publication et mention de la délivrance du brevet: **27.06.2012**
(21) Numéro de dépôt: 08838259.3
(22) Date de dépôt: 18.09.2008
(51) Int. Cl.: B29C 45/58

(54) **MACHINE DE VULCANISATION DE CAOUTCHOUC, ET PROCEDE DE MISE EN OEUVRE CORRESPONDANT**
MASCHINE ZUR GUMMIVULKANISIERUNG UND ENTSPRECHENDES VERFAHREN ZUR DURCHFÜHRUNG
MACHINE FOR RUBBER VULCANISATION, AND CORRESPONDING METHOD FOR ACHIEVING SAME

(30) Priorité: 21.09.2007 FR 0757746
(43) Date de publication de la demande: 23.06.2010
(73) Titulaire: Rep International, 69960 Corbas (FR)
(72) Inventeur: DEMIN, Stéphane, F-38460 Panossas (FR); NOGHA, Christophe, F-69500 Bron (FR)
(74) Mandataire: Myon, Gérard Jean-Pierre
(86) Numéro de dépôt international: PCT/FR2008/051676
(87) Numéro de publication internationale: WO 2009/047454

(56) Documents cités:
- EP-A- 1 186 339
- DE-A1- 1 926 488
- JP-A- 10 100 198
- JP-A- 55 093 437
- JP-A- 2005 014 311
- US-A- 4 199 315
- US-A1- 2004 114 461

## Description

La présente invention concerne une machine de vulcanisation de caoutchouc, ainsi que son procédé de mise en oeuvre.

L'invention vise plus particulièrement la vulcanisation du caoutchouc, cependant elle trouve son application à des domaines techniques voisins, tels que notamment l'injection ou la mise en forme des silicones.

De manière classique, une machine de vulcanisation de caoutchouc comporte tout d'abord des moyens de plastification et d'injection du matériau thermodurcissable. L'état de la technique prévoit plusieurs alternatives, en ce qui concerne la structure de ces moyens.

Ainsi, une première solution fait appel à des moyens de plastification séparés, qui incluent une vis de convoyage, assurant le chauffage du matériau. Ces moyens de plastification sont associés à des moyens d'injection distincts, qui comprennent notamment un piston associé à une chambre de réception du matériau rendu malléable.

A titre de variante, les moyens de plastification peuvent être confondus avec les moyens d'injection. Dans ce cas, on retrouve une injection dite « vis-piston », dans laquelle la vis de plastification fait office de piston d'injection.

On connaît enfin une autre solution alternative, dite FIFO (First In First Out). Dans ce mode de réalisation, la plastification est effectuée au travers du piston d'injection.

Après la phase initiale de plastification et d'injection, mise en oeuvre selon l'une ou l'autre des possibilités décrites ci-dessus, le matériau malléable est injecté dans un canal d'écoulement, dont l'extrémité aval délimite au moins un orifice de sortie. Ce dernier débouche dans des canaux d'alimentation d'un moule, qui sont eux-mêmes en communication avec les empreintes de ce moule.

Ainsi dans le canal d'écoulement, qui est situé en amont du moule, le matériau malléable ne durcit sensiblement pas, en service, du fait des conditions opératoires telles que notamment la température et la vitesse d'écoulement. En revanche, dans le volume intérieur du moule, à savoir les canaux d'alimentation et les empreintes, ce matériau malléable est amené à durcir, du fait de la température et du phénomène de stagnation auquel il est soumis. A cet égard, l'orifice de sortie du canal d'écoulement présente une section réduite, permettant de séparer la partie de matériau durcie de celle qui ne l'est pas, au terme du durcissement.

Une problématique habituelle de la fabrication de produits réalisés en caoutchouc réside dans le temps de vulcanisation, que l'on souhaite réduire dans la mesure du possible. Ce problème est par exemple abordé dans US-B-6 280 175.

Ce document enseigne de ménager, dans le canal d'écoulement, à savoir dans une zone où le matériau malléable ne durcit pas, une restriction dont la section transversale n'est pas circulaire, mais se trouve au contraire allongée globalement à la façon d'une ellipse. De la sorte, le caoutchouc est échauffé de manière homogène, en tout point de sa section transversale. En d'autres termes, la présence de cette restriction permet d'apporter une quantité de chaleur substantielle au niveau de la veine centrale de caoutchouc, ce qui permet de réduire le temps de vulcanisation correspondant.

La solution décrite dans ce brevet américain 6 280 175 implique cependant d'autres inconvénients. En effet, elle s'accompagne d'un échauffement qui peut être trop important et globalement non homogène, propre à dégrader localement la matière et par conséquent à induire des défauts sur la pièce finale.

Par ailleurs, on connait également le document DE-A-19 26 488, qui concerne un dispositif de mélange dans lequel deux veines situées de part et d'autre de l'axe d'écoulement sont inversées parallèlement l'une à l'autre, en coupant un plan axial médian. Ainsi, la direction d'écoulement du matériau malléable est modifiée pour réaliser une homogénéisation mutuelle dans chaque veine. Toutefois, ce document vise l'égalisation de la viscosité et de la température du matériau, et son enseignement n'est pas applicable lorsque l'on souhaite distinguer une veine centrale et une veine périphérique.

On connaît en outre des solutions alternatives, qui décrivent l'utilisation de dispositifs permettant de modifier la direction d'écoulement du matériau malléable. Cependant, contrairement à l'enseignement du brevet américain ci-dessus, ces dispositifs sont placés dans le moule proprement dit, à savoir dans une zone où le matériau malléable est amené à durcir.

De façon plus précise, EP-A-1 186 339 décrit un mélangeur statique, destiné à homogénéiser le matériau malléable. L'utilisation de ce dispositif induit une élévation de la température de chaque veine fluide, ce qui implique par conséquent des problèmes analogues à ceux rencontrés lors de la mise en oeuvre du brevet américain ci-dessus.

De plus, US-A-4 199 315 divulgue une machine de moulage par injection de pneumatiques dans laquelle, au sein du moule, le matériau malléable est tout d'abord séparé en deux flux dérivés. En amont de cette dérivation, on retrouve une veine centrale froide, ainsi qu'une veine périphérique plus chaude. Puis, au sein de chaque flux dérivé, on retrouve une veine froide et une veine chaude s'écoulant de manière globalement symétrique par rapport à l'axe longitudinal de chaque canal dérivé.

Ce document enseigne ensuite de traiter chaque flux dérivé, en modifiant les trajectoires d'écoulement des veines respectivement chaude et froide. Cette solution ne peut s'appliquer à un flux non divisé, dans lequel la veine froide centrale est entourée par une veine chaude périphérique. De plus, elle trouve uniquement son intérêt à des applications très spécifiques, telles que le moulage de pneumatiques.

Ceci étant précisé, l'invention vise à proposer une machine permettant de remédier à ces différents inconvénients.

A cet effet, elle a pour objet une machine d'injection d'un matériau durcissable, selon la revendication 1 annexée.

L'invention a également pour objet un procédé de mise en oeuvre de la machine ci-dessus, selon la revendication 9 annexée.

L'invention va être décrite ci-après, en référence aux dessins annexés, donnés uniquement à titre d'exemples non limitatifs, dans lesquels :
- la figure 1 est une vue en coupe longitudinale, illustrant une machine de vulcanisation de caoutchouc conforme à l'invention ;
- les figures 2A, 2B et 2C sont des vues à plus grande échelle, respectivement en coupe longitudinale, de dessus et de dessous, illustrant un dispositif d'inversion du champ radial de température conforme à l'invention ;
- la figure 3 est une vue en coupe longitudinale, illustrant la répartition radiale du champ de température, respectivement en amont et en aval de ce dispositif d'inversion ;
- les figures 4 et 5 sont des graphes, illustrant la variation de température en fonction de la position radiale, au niveau des lignes IV-IV et V-V à la figure 3 ;
- les figures 6A, 6B et 6C sont des vues schématiques, illustrant les quantités de chaleur apportées au caoutchouc, respectivement dans deux solutions de l'état de la technique et dans la solution conforme à l'invention ; et
- les figures 7 et 8 sont des vues en coupe longitudinale, analogues à la figure 3, illustrant deux variantes de réalisation de l'invention.

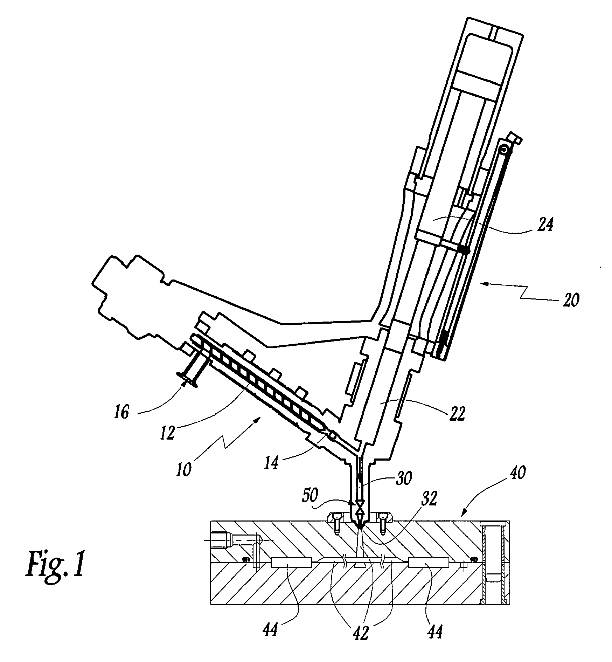

La machine de vulcanisation de caoutchouc conforme à l'invention, illustrée sur la figure 1, comprend tout d'abord des moyens de plastification et d'injection, de type connu en soi. Il est tout d'abord prévu des moyens de plastification 10, comportant une vis 12 logée dans un canal 14, qui est associée à des moyens de chauffage non représentés. Cette vis 12 est de plus associée à un orifice 16 d'admission de la matière dans le canal 14, en vue du convoyage du caoutchouc malléable vers l'aval de la machine.

Il est en outre prévu des moyens d'injection 20, également de type classique, qui comprennent une chambre 22, susceptible d'être remplie en caoutchouc fluide depuis le canal de plastification 14. Cette chambre 22 reçoit un piston 24, qui assure l'injection du caoutchouc fluide vers un canal d'écoulement 30, également de type classique.

Dans l'exemple illustré, on retrouve des moyens de plastification 10, qui sont distincts des moyens d'injection 20. Cependant, l'invention trouve également son application à des moyens de plastification et d'injection, tels que ceux décrits dans le préambule de la présente description. Ainsi, on peut à titre alternatif faire appel à une injection dite « vis-piston », ou bien encore à une injection dite « FIFO ».

Le canal 30 présente un orifice de sortie 32, qui est mis en communication avec l'entrée d'un moule 40, qui n'est pas objet de la présente invention. De façon connue en soi, ce moule 40 est creusé de différents canaux d'alimentation 42, qui débouchent dans des empreintes 44.

De manière habituelle, on peut distinguer deux zones, à savoir d'une part le canal d'écoulement 30 et, d'autre part, le volume intérieur du moule formé par les canaux d'alimentation 42 et les empreintes 44. Ainsi, dans le canal d'écoulement 30, le caoutchouc ne durcit sensiblement pas en service, notamment du fait de sa température et de sa vitesse d'écoulement. En revanche, dans les canaux 42 et les empreintes 44, le caoutchouc est destiné à durcir au terme de l'opération de vulcanisation, en particulier car il est sujet à un phénomène de stagnation à la température du moule.

Immédiatement en amont de l'orifice de sortie 32, à savoir dans une zone où, comme on l'a vu ci-dessus, le caoutchouc ne durcit pas, il est prévu un dispositif conforme à l'invention, permettant d'inverser le champ radial de température du caoutchouc dans le canal d'écoulement 30. Dans ce qui suit et à des fins de clarté, ce dispositif, qui est désigné dans son ensemble par la référence 50, sera dénommé dispositif d'inversion.

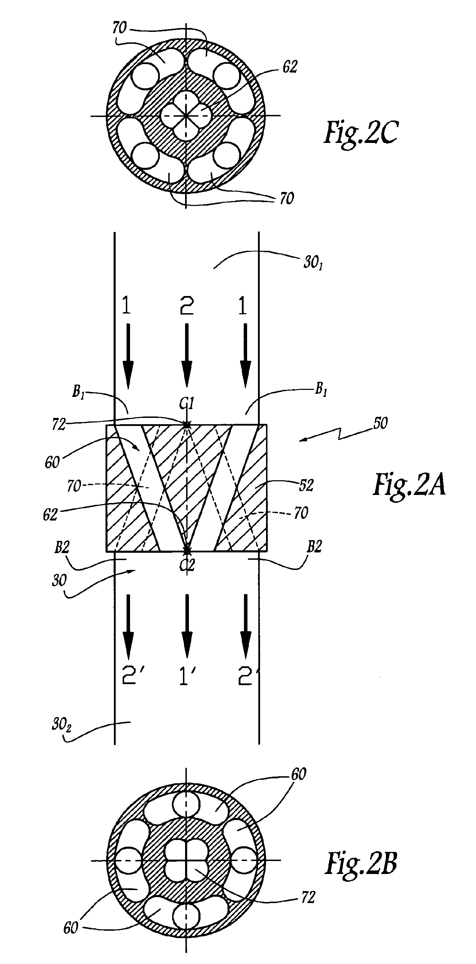

En faisant plus spécifiquement référence aux figures 2A à 2C, ce dispositif 50 comprend tout d'abord un corps massif 52, réalisé par exemple en acier, qui est solidarisé aux parois du canal d'écoulement 30 par tout moyen approprié notamment par intégration dans un alésage de ce canal et immobilisation par une buse vissée. Ce corps 52 est cylindrique, tout en étant coaxial au canal d'écoulement 30. Il est creusé de différents canaux, à savoir quatre canaux convergents 60 et quatre canaux divergents 70, en faisant référence au sens d'écoulement de la matière, à savoir vers le bas sur les figures 1 et 2A.

En référence à cette figure 2A, les canaux convergents 60 sont placés en regard, en amont, avec les bords périphériques B1 de la zone amont 30₁ du canal d'écoulement. De plus, ces canaux 60 se rejoignent, à leur extrémité aval, de manière à former une unique ouverture de sortie 62, qui débouche en regard du centre C₂ de la zone aval 30₂ du canal d'écoulement 30.

Les canaux divergents 70 s'étendent à partir d'une ouverture 72, qui communique avec le centre C1 de la zone amont 30₁ du canal d'écoulement 30. Puis, ces canaux 70 s'éloignent les uns des autres, de manière à déboucher en regard des bords B2 de la zone aval 30₂ du canal d'écoulement 30.

Sur la figure 2A, on note 1 et 2 les veines de caoutchouc fluide s'écoulant, en amont du dispositif, respectivement au voisinage des bords B1 et du centre C1 de ce canal. Etant donné la présence des canaux 60 et 70, la veine périphérique amont 1 forme la veine centrale aval 1', alors que la veine centrale amont 2 forme la veine périphérique aval 2'.

Le nombre, la disposition et la géométrie des différents canaux 60 et 70 sont tels, qu'ils permettent d'assurer un transfert satisfaisant des écoulements de fluide. De plus, il est avantageux que ces canaux 60 et 70 occupent une partie substantielle de la section transversale du canal, afin d'éviter un apport de chaleur trop important. En effet, si les canaux sont trop étroits, on retrouve un phénomène d'échauffement, tel que celui induit lors de la mise en oeuvre du brevet américain 6 280 175, évoqué ci-dessus.

De façon avantageuse, en tout point du dispositif d'inversion, la somme des sections transversales des différents canaux 60 et 70 est supérieure à 30%, de préférence à 50%, de la section totale du canal d'écoulement 30. Ainsi, dans l'exemple illustré, les huit canaux, respectivement divergents et convergents, occupent environ 55% de la surface du canal, considérée de façon transversale.

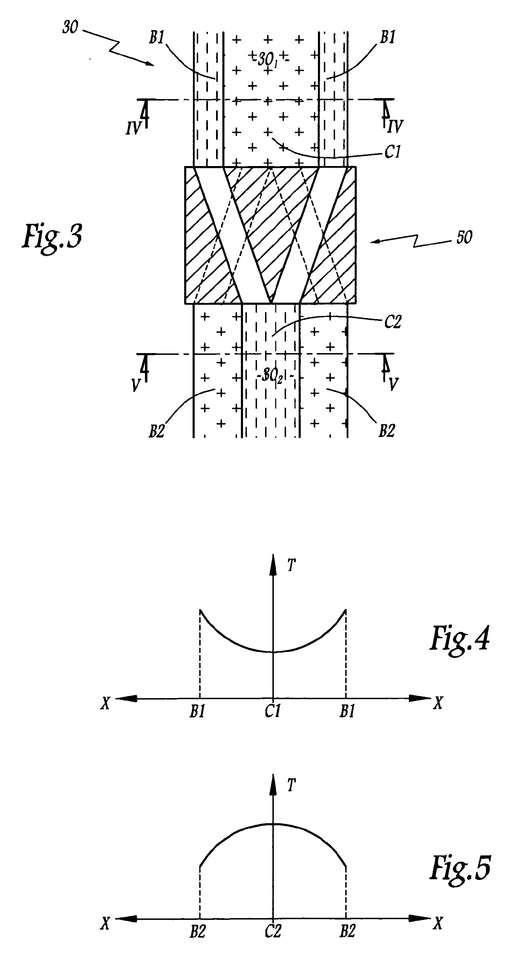

La figure 3 illustre la mise en oeuvre du dispositif d'inversion 50, en ce qui concerne le profil de température radial du caoutchouc, respectivement en amont et en aval de ce dispositif 50. Il est connu que, dans le canal principal 30, l'écoulement de la matière est de type laminaire. Par conséquent, la vitesse de celle-ci présente une valeur nulle au niveau des bords B1, ainsi qu'une valeur maximale au niveau du centre C1.

Dans ces conditions, la température du caoutchouc présent sur le bord B1 de ce canal 30 est très supérieure à celle qu'il présente au voisinage du centre C1, immédiatement en amont du dispositif 50. Ceci est illustré par des hachures de types différents sur la figure 3, ainsi que par le profil radial de température de la figure 4, correspondant à la ligne IV-IV à la figure 3.

Sur cette figure 4, on retrouve en ordonnées la température T et, en abscisses, la position radiale X-X. En d'autres termes, le centre C1 correspond à une abscisse nulle, alors que les bords B1 correspondent à une abscisse dont la valeur absolue est maximale. Comme le montre cette figure 4, le profil radial de température croît, depuis le centre C1, de manière globalement symétrique en direction des bords B1.

En aval du dispositif 50, compte tenu de la présence des canaux d'inversion 60 et 70, la veine centrale 1' est désormais chaude, car elle correspond à la veine périphérique chaude 1 de la partie amont. De plus, en aval, la veine périphérique 2' est froide, puisqu'elle correspond à la veine centrale amont 2. Cet inversement de température est matérialisée par une interversion de la nature des hachures, entre l'amont et l'aval.

Cette inversion est également matérialisée sur la figure 5, qui correspond au profil radial de température le long de la ligne V-V à la figure 3. Ainsi, la température décroît depuis une valeur maximale au niveau du centre C2, jusqu'à une valeur minimale au niveau des bords B2.

Comme il ressort de ce qui précède, le dispositif 50 assure donc l'inversion du champ radial de température du caoutchouc. En d'autres termes, en amont de ce dispositif, plus on se trouve près du bord B1 et plus la température du caoutchouc est élevée. En revanche, en aval, plus on se trouve près du bord B2 et plus la température du caoutchouc est basse.

Les veines aval respectivement centrale 1' et périphérique 2' s'écoulent alors en direction de l'orifice de sortie 32, puis dans les canaux 42 jusqu'aux empreintes 44 du moule 40. Durant ce trajet postérieur au passage dans le dispositif d'inversion 50, le caoutchouc reçoit une quantité de chaleur supplémentaire.

Comme cela a été expliqué ci-dessus, la veine périphérique 2' reçoit une quantité de chaleur supérieure à celle fournie à la veine centrale 1'. Or, étant donné que cette veine périphérique 2' est plus froide, immédiatement en sortie du dispositif d'inversion 50, les quantités de chaleur apportées en tout point du caoutchouc tendent à s'égaliser, lors de l'admission de la matière dans les empreintes 44.

En d'autres termes, en ajustant la forme et le positionnement du dispositif d'inversion 50, il est possible de contrôler le profil du champ de température radial du caoutchouc, lorsque ce dernier arrive dans les empreintes. Il est possible de conférer en particulier un caractère sensiblement homogène à ce champ de température radial lors de l'arrivée du caoutchouc dans les empreintes, à savoir que ce caoutchouc présente une température globalement identique au niveau d'une section transversale donnée.

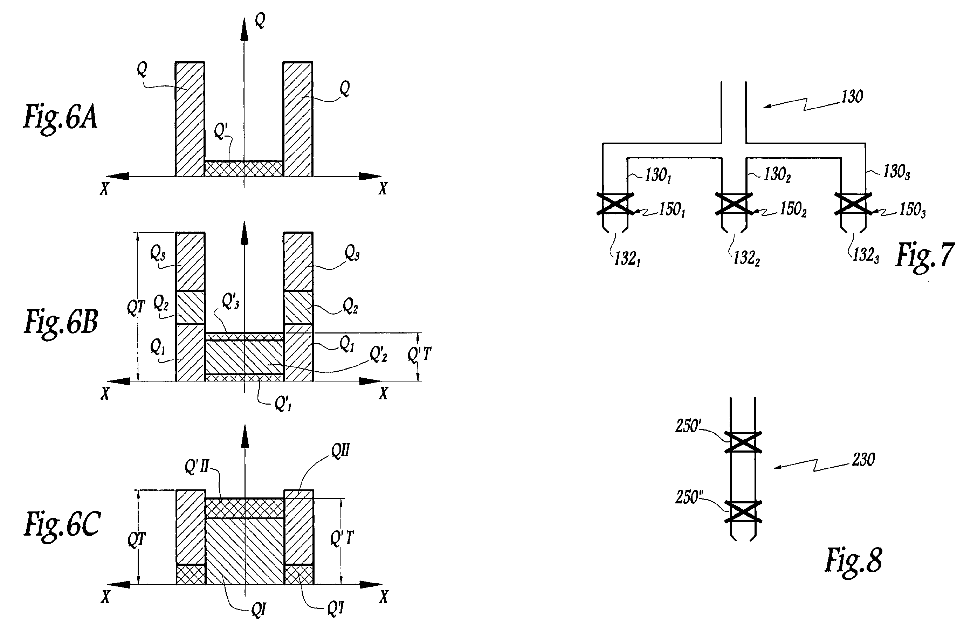

A cet égard, les figures 6A, 6B et 6C illustrent les quantités de chaleur, fournies respectivement aux veines centrale et périphérique, depuis leur injection dans le canal d'écoulement jusqu'à leur admission dans les empreintes 44. La figure 6A concerne un état de la technique habituel, la figure 6B est relative à l'enseignement du brevet américain 6 280 175, alors que la figure 6C illustre la solution de l'invention.

Dans l'art antérieur de la figure 6A, la veine périphérique est en permanence davantage échauffée que la veine centrale, du fait de l'existence d'un écoulement laminaire. Dans ces conditions, la quantité de chaleur globale Q, apportée à cette veine périphérique, est très nettement supérieure à celle Q' apportée à la veine centrale.

Dans l'art antérieur illustré par le brevet américain 6 280 175, on peut distinguer trois zones principales d'apport de chaleur. Il s'agit tout d'abord de la partie amont, située avant la restriction faisant l'objet de l'invention de ce brevet américain. On retrouve ensuite la zone de la restriction proprement dite, puis la région s'étendant en aval de cette restriction.

Dans la zone amont, l'écoulement est laminaire, de sorte que la quantité de chaleur Q1 apportée à la veine périphérique est nettement supérieure à celle Q'1 apportée à la veine centrale. Puis, au niveau de la restriction, on note un apport de chaleur sensiblement homogène, correspondant à des valeurs Q2 et Q'2 sensiblement égales. Enfin, en aval de la restriction, l'écoulement redevient laminaire de sorte que la quantité de chaleur Q3 fournie à la veine périphérique est nettement supérieure à celle Q'3 fournie à la veine centrale.

Dans ces conditions, comme l'illustre la figure 6B, la quantité de chaleur totale QT apportée à la veine périphérique est égale à la somme des quantités Q1, Q2 et Q3. QT est nettement supérieure à la quantité totale Q'T de chaleur apportée à la veine centrale, qui correspond à la somme de Q'1, Q'2 et Q'3, malgré la présence de la restriction.

La figure 6C illustre la répartition radiale de température apportée conformément à l'invention. Sur cette figure, la zone médiane est relative à la veine centrale finale 1', à savoir celle s'écoulant en aval du dispositif 50, dont on rappellera qu'elle correspond à la veine périphérique amont 1. De façon analogue, les parties latérales de cette figure 6C correspondent à la veine périphérique finale 2', issue de la veine centrale initiale 2.

La quantité de chaleur totale QT fournie à la veine périphérique finale 2' correspond à la somme, d'une part, de la quantité de chaleur Q'I apportée à la veine centrale initiale 2 en amont du dispositif 50 et, d'autre part, de la quantité de chaleur QII fournie à cette veine périphérique 2' en aval du dispositif. Du fait de l'écoulement laminaire, QI est relativement faible, alors que QII est nettement plus élevée.

De façon analogue, la quantité de chaleur totale Q'T apportée à la veine centrale finale 1' correspond à la somme, d'une part, de la quantité de chaleur QI apportée à la veine périphérique initiale 1 en amont du dispositif et, d'autre part, de la quantité de chaleur Q'II apportée à cette veine centrale 1' en aval du dispositif. Pour les mêmes raisons qu'évoquées ci-dessus, QI est nettement supérieure à Q'I, alors que Q'II est nettement inférieure à QII. Par conséquent, comme le montre la figure 6C, les quantités de chaleur QT et Q'T apportées à ces deux veines tendent à s'équilibrer, grâce à l'inversion apportée par le dispositif 50.

L'invention permet d'atteindre les objectifs précédemment mentionnés.

En effet, comme cela ressort de ce qui précède, toutes les zones de l'écoulement de caoutchouc ont reçu une quantité de chaleur substantielle, lors de leur entrée dans les empreintes 44. En d'autres termes, le caoutchouc se trouve en tout point à une température relativement élevée, ce qui permet de garantir une durée de vulcanisation relativement basse.

De plus, comme illustré notamment à la figure 6C, il existe une grande homogénéité entre les différentes quantités de chaleur apportées aux différents points de la section transversale du caoutchouc, immédiatement avant l'entrée dans les empreintes. En d'autres termes, il n'existe pas de zone de caoutchouc ayant reçu une quantité de chaleur particulièrement importante, ce qui permet d'éviter tout phénomène de suréchauffement. Dans ces conditions, l'invention permet de s'affranchir d'une vulcanisation trop rapide de certaines zones de matière.

A cet égard, on notera qu'il est du mérite de la Demanderesse d'avoir identifié le problème lié à l'enseignement de US-B-6 280 175. En effet, dans ce document, la présence d'une restriction garantit l'obtention d'une température relativement élevée du caoutchouc, même dans sa partie centrale, ce qui est favorable pour la durée de vulcanisation. En revanche, cette solution s'accompagne de la fourniture d'une quantité de chaleur particulièrement élevée au niveau de la veine périphérique de caoutchouc. Ceci à l'origine des problèmes évoqués ci-dessus, à savoir un suréchauffement, une vulcanisation trop rapide et une dégradation de la matière.

La figure 7 illustre une première variante de réalisation de l'invention, qui fait appel à un canal d'écoulement 130 de type BCR (Blocs à Canaux Régulés). De manière classique, ce canal d'écoulement 130 se divise, dans sa partie aval, en plusieurs canaux dérivés, en l'occurrence au nombre de trois, à savoir 130₁, 130₂ et 130₃. Chaque canal dérivé se trouve associé à une sortie correspondante 132₁, 132₂ et 132₃, mises en communication avec les empreintes de trois moules non représentés.

Dans ce cas, on prévoit trois dispositifs d'inversion 150₁, 150₂ et 150₃, immédiatement en amont de chaque sortie. De la sorte, la répartition du champ radial de température du caoutchouc est inversée, en aval de chacun de ces dispositifs. Ceci permet une répartition radiale homogène du flux de chaleur apportée à chacun des écoulements dérivés de caoutchouc, qui s'écoule en direction des empreintes non représentées des moules aval.

La figure 8 illustre une variante supplémentaire de réalisation de l'invention, dans laquelle le canal d'écoulement 230 est équipé de deux dispositifs d'inversion 250' et 250", dont chacun est analogue à celui 50 des figures 1 à 6. En d'autres termes, ces deux dispositifs d'inversion 250' et 250" sont placés en série, contrairement aux dispositifs 150₁ à 150₃ de la figure 7, qui sont placés en parallèle. Ce mode de réalisation est avantageux, dans la mesure où il assure une répartition homogène de l'échauffement dans le cas d'une longueur d'écoulement importante, grâce à la mise en oeuvre de multiples inversions.

Comme il ressort de ce qui précède, l'invention autorise une fourniture de chaleur contrôlée, qui peut être en particulier homogène, en ce qui concerne à la fois les veines centrale et périphérique de l'écoulement de caoutchouc. A cet effet, il convient d'ajuster le nombre et/ou l'emplacement de ces dispositifs d'inversion, tels que celui 50 de la figure 1. On peut également ajuster les conditions opératoires de l'écoulement de caoutchouc, à savoir notamment sa température, sa pression, son débit, afin d'ajuster la quantité de chaleur générée en amont et en aval du dispositif d'inversion.

Un autre avantage de l'invention réside dans le fait qu'elle permet d'augmenter la longueur d'écoulement possible pour la matière. En effet, grâce à l'utilisation d'un ou plusieurs dispositifs d'inversion, il est possible de ne pas dégrader cette matière, même si celle-ci s'écoule sur une grande longueur.

Enfin, étant donné que le ou chaque dispositif d'inversion est situé dans le canal d'écoulement, à savoir dans une zone où le matériau ne durcit pas, il est possible d'utiliser ce dispositif un grand nombre de fois, voire de l'enlever afin de le replacer sur une autre machine. Ceci est à comparer avec les solutions de l'art antérieur, dans lesquelles les dispositifs modifiant la direction d'écoulement du matériau sont placés dans le moule proprement dit.

En effet, dans ce dernier cas, de tels dispositifs sont nécessaires pour chaque moule utilisé sur une même machine, ce qui augmente par conséquent le coût global de l'opération. De plus, ces dispositifs génèrent une perte de matière durcie à chaque cycle de moulage, ce qui implique des coûts supplémentaires.

## Revendications

1. Machine de vulcanisation de caoutchouc, comportant des moyens (10, 20) de plastification et d'injection dudit caoutchouc, propres à injecter ledit caoutchouc à l'état fluide dans un canal d'écoulement (30 ; 130 ; 230), dans lequel ledit caoutchouc ne durcit sensiblement pas en service, ce canal d'écoulement comprenant au moins une sortie (32; 132₁, 132₂, 132₃) susceptible d'être mise en communication avec le volume intérieur d'un moule (40), dans lequel ledit caoutchouc est amené à durcir, ce canal d'écoulement (30 ; 130 ; 230) étant pourvu d'au moins un dispositif d'inversion (50 ; 150₁, 150₂, 150₃ ; 250', 250"), propre à inverser le profil radial de température dans l'écoulement dudit caoutchouc fluide, entre l'amont et l'aval du ou de chaque dispositif d'inversion, chaque dispositif d'inversion (50) comprenant des moyens (60, 70) propres, d'une part, à diriger une première veine (1) de caoutchouc fluide présente à la périphérie (B1) d'une zone amont (30₁) du canal d'écoulement (30) vers le centre (C2) d'une zone aval (30₂) de ce canal d'écoulement et, d'autre part, à diriger une seconde veine (2) de caoutchouc présente au centre (C1) de ladite zone amont du canal d'écoulement vers la périphérie (B2) de ladite zone aval de ce canal d'écoulement, le dispositif d'inversion (50) comprenant un corps (52) solidaire des parois du canal d'écoulement, dans lequel sont ménagés plusieurs canaux divergents (70) et plusieurs canaux convergents (60), **caractérisée en ce que** les canaux divergents (70) sont disposés en regard du centre (C1) de la zone amont (30₁) du canal d'écoulement et débouchant à la périphérie (B2) de la zone aval (30₂) du canal d'écoulement, alors que les canaux convergents (60) sont disposés en regard de la périphérie (B1) de la zone amont (30₁) du canal d'écoulement et débouchent au centre (C2) de la zone aval (30₂) du canal d'écoulement.

2. Machine de vulcanisation de caoutchouc selon la revendication 1, **caractérisée en ce que** le corps (52) du dispositif d'inversion (50) est solidarisé aux parois du canal d'écoulement (30), notamment en étant intégré dans un alésage de ce canal d'écoulement (30) et immobilisé par une buse vissée.

3. Machine de vulcanisation de caoutchouc selon l'une quelconque des revendications 1 ou 2, **caractérisée en ce que**, en tout point du dispositif d'inversion (50), le rapport entre, d'une part, la somme des sections transversales des canaux respectivement convergents (60) et divergents (70) et, d'autre part, la section transversale totale du canal d'écoulement (30), est supérieure à 30%, de préférence à 50%.

4. Machine de vulcanisation de caoutchouc selon l'une des revendications 1 à 3, **caractérisée en ce qu'**il est prévu entre un et dix canaux convergents (60) ainsi qu'entre un et dix canaux divergents (70).

5. Machine de vulcanisation de caoutchouc selon la revendication 4, **caractérisée en ce qu'**il est prévu quatre canaux convergents (60) et quatre canaux divergents (70).

6. Machine de vulcanisation de caoutchouc selon l'une des revendications précédentes, **caractérisée en ce que** le canal d'écoulement (130) se divise en plusieurs canaux dérivés (130₁-130₃), et au moins un canal dérivé est pourvu d'un dispositif d'inversion correspondant (150₁-150₃).

7. Machine de vulcanisation de caoutchouc selon l'une des revendications précédentes, **caractérisée en ce qu'**il est prévu au moins deux dispositifs d'inversion (250', 250") placés en série dans le canal d'écoulement (230).

8. Procédé de mise en oeuvre de la machine conforme à l'une quelconque des revendications précédentes, dans lequel on fait s'écouler le caoutchouc dans le canal d'écoulement (30 ; 130 ; 230) puis, via la ou chaque sortie (32 ; 132₁-132₃), dans le volume intérieur d'au moins un moule (40), en direction d'au moins une empreinte (44),
**caractérisé en ce qu'**on ajuste le nombre et/ou l'emplacement des dispositifs d'inversion (50 ; 150₁-150₃ ; 250', 250"), et/ou les conditions opératoires dudit écoulement, en vue de contrôler la répartition radiale de température du caoutchouc, au voisinage de la ou de chaque empreinte (44).

9. Procédé selon la revendication 8, **caractérisé en ce que** la répartition radiale de température est sensiblement homogène.

## Claims

1. A rubber vulcanization machine, including means (10, 20) for plasticizing and injecting said rubber, which means are suitable for injecting said rubber in the fluid state into a flow channel (30; 130; 230), in which said rubber substantially does not set in use, said flow channel having at least one outlet (32; 132₁, 132₂, 132₃) suitable for being put into communication with the internal volume of a mold (40) in which said rubber is to set, the flow channel (30; 130; 230) being provided with at least one inverter device (50; 150₁, 150₂, 150₃; 250', 250") suitable for inverting the radial temperature profile in the flow of said fluid rubber, between upstream and downstream of each inverter device, each inverter device (50) comprising means (60, 70) suitable firstly for directing a first stream (1) of fluid rubber present at the periphery (B1) of an upstream zone (30₁) of the flow channel (30) to the center (C2) of a downstream zone (30₂) of said flow channel, and secondly for directing a second stream (2) of rubber present at the center (C1) of said upstream zone of the flow channel to the periphery (B2) of said downstream zone of said flow channel, the inverter device (50) comprising a body (52) that is secured to the walls of the flow channel, and that is provided with at least one divergent channel (70) and with at least one convergent channel (60), **characterized in that** the divergent channels (70) are disposed facing the center (C1) of the upstream zone (30₁) of the flow channel and open out at the periphery (B2) of the downstream zone (30₂) of the flow channel, whereas the convergent channels (60) are disposed facing the periphery (B1) of the upstream zone (30₁) of the flow channel and open out at the center (C2) of the downstream zone (30₂) of the flow channel.

2. A rubber vulcanization machine according to claim 1, **characterized in that** the body (52) of the inverter device (50) is secured to the walls of the flow channel (30) in particular by being incorporated in a bore in the flow channel (30) and being held stationary be a screw-on nozzle.

3. A rubber vulcanization machine according to any one of claims 1 or 2, **characterized in that**, at any point of the inverter device (50), the ratio between firstly the sum of the cross-sectional areas of the convergent and divergent channels (60, 70) and secondly the total cross-sectional area of the flow channel (30) is greater than 30% and preferably greater than 50%.

4. A rubber vulcanization machine according to any one of claims, **characterized in that** in the range one to ten convergent channels (60) are provided, and in the range one to ten divergent channels (70) are provided.

5. A rubber vulcanization according to claim 4, **characterized in that** four convergent channels (60) and four divergent channels (70) are provided.

6. A rubber vulcanization machine according to any one of the preceding claims, **characterized in that** the flow channel (130) subdivides into a plurality of branch channels (130₁-130₃), and at least one branch channel is provided with a corresponding inverter device (150₁-150₃).

7. A rubber vulcanization machine according to any one of the preceding claims, **characterized in that** at least two inverter devices (250', 250") are provided, which devices are placed in series in the flow channel (230).

8. A method of working the machine according to any one of the preceding claims, in which method the material is caused to flow through the flow channel (30; 130; 230) and then, via the or each outlet (32; 132₁-132₃), into the inside volume of at least one mold (40), towards at least one cavity (44), said method being **characterized in that** the number and/or the locations of the inverter devices (50; 150₁-150₂; 250', 250") and/or the operating conditions of said flow are adjusted with a view to controlling the radial temperature distribution of the material, in the vicinity of the or each cavity (44).

9. A method according to claim 8, **characterized in that** that said radial distribution is substantially uniform.

## Patentansprüche

1. Maschine zur Gummivulkanisierung, umfassend Mittel (10, 20) zur Plastifizierung und Einspritzung des Gummis, die geeignet sind, dieses Gummi im flüssigen Zustand in einen Düsenkanal (30; 130; 230) zu spritzen, in welchem das Gummi in Betrieb im Wesentlichen nicht härtet, wobei dieser Düsenkanal mindestens einen Auslass (32; 132₁, 132₂, 132₃) umfasst, der mit dem Innenraum einer Form (40) in Verbindung gesetzt werden kann, in welchem das Gummi zur Härtung gebracht wird, wobei dieser Düsenkanal (30; 130; 230) mit mindestens einer Umkehrvorrichtung (50; 150₁, 150₂, 150₃; 250', 250"), versehen ist, die geeignet ist, das radiale Temperaturprofil in der Strömung dieses flüssigen Gummis vor und hinter der oder jeder Umkehrvorrichtung umzukehren, wobei jede Umkehrvorrichtung (50) Mittel (60, 70) umfasst, die geeignet sind, einerseits einen ersten Strahl (1) flüssigen Gummis, der am Umfang (B1) einer vorderen Zone (30₁) des Düsenkanals (30) liegt, zum Zentrum (C2) einer hinteren Zone (30₂) dieses Düsenkanals hin zu lenken, und andrerseits, einen zweiten Strahl (2) des Gummis, der im Zentrum (C1) dieser vorderen Zone des Düsenkanals liegt, zum Umfang (B2) dieser hinteren Zone des Düsenkanals hin zu lenken, wobei die Umkehrvorrichtung (50) einen Körper (52) umfasst, der mit den Wänden des Düsenkanals fest verbunden ist, worin mehrere divergierende Kanäle (70) und mehrere konvergierende Kanäle (60) ausgespart sind, **dadurch gekennzeichnet, dass** die divergierenden Kanäle (70) dem Zentrum (C1) der vorderen Zone (30₁) des Düsenkanals gegenüber angeordnet sind und am Umfang (B2) der hinteren Zone (30₂) des Düsenkanals austreten, während die konvergierenden Kanäle (60) dem Umfang (B1) der vorderen Zone (30₁) des Düsenkanals gegenüber angeordnet sind und im Zentrum (C2) der hinteren Zone (30₂) des Düsenkanals austreten.

2. Maschine zur Gummivulkanisierung nach Anspruch 1, **dadurch gekennzeichnet, dass** der Körper (52) der Umkehrvorrichtung (50) mit den Wänden des Düsenkanals (30) fest verbunden ist, insbesondere, indem er in eine Bohrung dieses Düsenkanals (30) eingebaut und durch ein geschraubtes Düsenmundstück befestigt ist.

3. Maschine zur Gummivulkanisierung nach einem der Ansprüche 1 oder 2, **dadurch gekennzeichnet, dass** das Verhältnis zwischen der Summe der Querschnitte der jeweiligen konvergierenden (60) und divergierenden Kanäle (70) einerseits und dem Gesamtquerschnitt des Düsenkanals (30)
andrerseits an jedem Punkt der Umkehrvorrichtung (50) größer als 30 % und bevorzugt als 50 % ist.

4. Maschine zur Gummivulkanisierung nach einem der Ansprüche 1 bis 3, **dadurch gekennzeichnet, dass** zwischen ein und zehn konvergierende Kanäle (60) sowie zwischen ein und zehn divergierende Kanäle (70) vorgesehen sind.

5. Maschine zur Gummivulkanisierung nach Anspruch 4, **dadurch gekennzeichnet, dass** vier konvergierende Kanäle (60) und vier divergierende Kanäle (70) vorgesehen sind.

6. Maschine zur Gummivulkanisierung nach einem der vorherigen Ansprüche, **dadurch gekennzeichnet, dass** der Düsenkanal (130) sich in mehrere Ableitungskanäle (130₁ - 130₃) aufteilt und mindestens ein Ableitungskanal mit einer entsprechenden Umkehrvorrichtung (150₁ - 150₃) versehen ist.

7. Maschine zur Gummivulkanisierung nach einem der vorherigen Ansprüche, **dadurch gekennzeichnet, dass** mindestens zwei Umkehrvorrichtungen (250', 250") vorgesehen sind, die im Düsenkanal (230) in Reihe angeordnet sind.

8. Verfahren zur Anwendung der Maschine nach einem der vorherigen Ansprüche, wobei das Gummi durch den Düsenkanal (30; 130; 230) und dann durch den oder jeden Auslass (32; 132₁ - 1323) in den Innenraum mindestens einer Form (40) in Richtung mindestens eines Formhohlraum (44) strömen gelassen wird,
**dadurch gekennzeichnet, dass** die Zahl und/oder die Lage der Umkehrvorrichtungen (50; 150₁-150₃; 250', 250") und/oder die Betriebsbedingungen dieser Strömung angepasst wird, um die radiale Temperaturverteilung des Gummis in der Nachbarschaft des oder jedes Formhohlraums (44) zu regeln.

9. Verfahren nach Anspruch 8, **dadurch gekennzeichnet, dass** die radiale Temperaturverteilung im Wesentlichen homogen ist.
